# EUROPEAN PATENT APPLICATION

(11) **EP 4 468 523 A1**
(43) Date of publication of application: **27.11.2024**
(21) Application number: 23175165.2
(22) Date of filing: 24.05.2023
(51) Int. Cl.: H01R 4/70, H02K 5/22, H01R 4/30

(54) **A CONNECTOR UNIT AND AN ELECTRIC VEHICLE AND AN ELECTRIC MOTOR COMPRISING SUCH**

(71) Applicant: Polestar Performance AB, 405 31 Göteborg (SE)
(72) Inventor: STRANDEMO, Per, 433 65 Sävedalen (SE); STENVALL, Lars, 459 93 Ljungskile (SE)
(74) Representative: Zacco Sweden AB

(57) **Abstract**

The present disclosure relates to a connector unit (1) for supplying power to an electric motor of a vehicle comprising a plurality of connection elements (2), each connection element (2) comprising a first end portion and a second end portion (2b). Further, the connector unit (1) comprises an insulating body (3) being connected to each of said a plurality connection elements (2), the insulating body (3) electrically isolating said plurality of connection elements (2) from each other. Further, the connector unit (1) comprises at least a first electrically insulated fastening means (4). The insulating body (3) comprises a plurality of cavities (5), each cavity (5) being arranged to receive a corresponding connection element (2), wherein at least two of said plurality of cavities (5) are arranged along a first extension axis (x1). Furthermore, the first fastening means extends (4), along said first extension axis (x1), through the at least two cavities (5) arranged along said first extension axis (x1) and corresponding first portions (2a) retained therein, thereby securing at least two connection elements (2) to said insulating body (3).

## Description

### TECHNICAL FIELD

The present disclosure relates to a connector unit for supplying power to an electric motor of an electric vehicle and an electric vehicle and an electric motor comprising such a connector unit.

### BACKGROUND

Electric vehicles (EV) are becoming increasingly popular as consumers look to decrease their environmental impact and improve air quality.

An electric motor typically comprises a rotor and a stator. The rotor is the rotating part of the motor that contains the permanent magnets or electromagnets. The stator is the stationary part that contains the coils of wire that create a magnetic field.

Power electronics are also an important component of an electric motor. These include e.g., the inverter, which converts the DC power from the battery into AC power for the motor.

Generally, weight reduction and space efficiency is important for an electric motor as it can influence amount of power the motor can produce and material costs. Hence, a more spaceefficient motor can produce more power while taking up less space and weight.

The power electronics are usually in electrical connection to the electric motor by a connector unit. The connector unit acts as an interface between the motor and the power electronics. It is of importance that such a connector unit is compact while functioning in accordance with requirements.

Conventional connector units arranged to supply power to the electric motor are bulky in size. Therefore, it is challenging to package and seal the connector units between the power electronics and the electric motor. Further, the connector units are usually also inconvenient to manufacture and assemble.

Thus, there is room for connector units in the present art to explore the domain of providing a connector unit that is improved at least in terms of compactness. Preferably, such a connector unit should also be improved in terms of manufacturing convenience. Thus, even though previous solutions may work well in some situations, it would be desirable to provide a connector unit that at least address requirements related to improving a compactness thereof.

### SUMMARY

It is therefore an object of the present disclosure to alleviate at least some of the mentioned drawbacks to provide a connector unit that is improved in compactness. Further, another object of the disclosure is to provide a connector unit that is also improved in terms of manufacturing convenience.

The present disclosure relates to a connector unit for supplying (e.g. 3 phase) power to an electric motor (i.e. stator windings) of a vehicle comprising a plurality of connection elements, each connection element comprising a first end portion electrically connected to power electronics, and a second end portion connected to a winding of said electric motor.

Further, the connector unit comprises an insulating body being connected to each of said plurality connection elements, the insulating body electrically isolating said plurality of connection elements from each other. Additionally, the connector unit comprises at least a first electrically insulated fastening means (such as a bolt sleeved in an insulating material). The insulating body comprises a plurality of cavities, each cavity being arranged to receive a corresponding connection element so that each cavity retains a first end portion of a single connection element.

Further, at least two of said plurality of cavities are arranged along a first extension axis. Furthermore, said first fastening means extends, along said first extension axis, through the at least two cavities arranged along said first extension axis, and also extends through corresponding first portions retained therein, thereby securing at least two connection elements to said insulating body.

The insulating body may be formed in an electrically insulated material such as plastic, rubber, glass or any other suitable insulating material.

An advantage of the connector unit according to the present disclosure is that single fastening means can secure two connection elements (and two busbars as will be discussed further herein). Hence, the connector unit is compact compared to other connector units. Moreover, the connector unit is material efficient as several connection elements may be secured to a small piece of material.

The insulating body may further be arranged to receive a corresponding busbar (at/in cavities thereof). Each busbar being connected, at a first busbar end portion thereof, to power electronics of said electric motor and wherein second busbar end portions are arranged to connect to said first end portion of a corresponding connection element so to electrically connect said connection element to said power electronics.

The busbar second end portions may be in contact to said first end portions within corresponding cavities. The busbars may have a length that extend from the first end portion to the second end portion of each busbar.

Further, each first end portion and each second busbar end portion may comprise a mating surface so that mating surfaces of first end portions are arranged to contact mating surfaces of corresponding second busbar end portions to form mating-pairs (defined by the parts of the busbar/connection elements that are in contact). Thereby, allowing the power electronics to transmit power to the stator windings through the busbar/connection elements. Further, then each fastening means is arranged to extend through at least two mating pairs. In some aspects, the busbar/connection elements may be a single piece.

Further, the connector unit may in some aspects comprise a second electrically insulated fastening means. The plurality of cavities may be at least four cavities, wherein two other of said at least four cavities of said insulating body are arranged along a second extension axis parallel to the first extension axis. The two other cavities are arranged to receive a corresponding connection element so that each cavity of said other two cavities retains a first end portion of a single connection element. The second fastening means extends, along said second extension axis, through the at least two cavities arranged along said second extension axis. Thus, the two fastening means jointly may secure four connection elements.

The plurality of (e.g. four) cavities may jointly form two parallel rows extending in a first direction along a width of the insulating body, each row being defined by at least a pair of said cavities. The first direction is perpendicular to said extension axis. Hence, four cavities, may define two rows and two columns. Advantageously forming a compact connector unit.

The insulating body may define a first outer surface and an opposing second outer surface, wherein each cavity is defined as a recess in one of said surfaces.

An advantage of having a recess in the outer surface is that it allows for easy manufacturing of the insulating body and also convenient attachment of the connection elements/busbars thereto.

The insulating body may comprise a pair of cavities in each (opposing) surface.

When attached, the first and/or second fastening means, extends from the first outer surface to said opposing second outer surface of the insulating body, thereby penetrating the full thickness thereof. In other aspects the fastening means may be an insulated clamping device clamping the opposing outer surfaces to secure the connection elements/busbars to the cavities.

The power electronics as defined herein may comprise an inverter device. The power electronics may further comprise any other device/circuitry as acknowledged by a skilled person in the art for allowing the stator windings to receive AC power. Other circuitry may be e.g. a motor controller, which regulates the speed and torque of the motor.

The electrically insulated fastening means may be a bolt or a screw sleeved in a dielectric material layer or any other suitable fastening means that is nonconductive. A fastening means in the form of a bolt, screw or nut allows for installing convenience.

The electric motor herein may be a 3-phase electric motor. Hence, the connection elements may be phase connection elements or neutral connection elements. For example, three phase connection elements may be associated to a respective phase so to supply power to a respective winding. A fourth connection element may then be a neutral connection element. For example the neutral connection element may be arranged to provide a DC-DC booster functionality. The DC-DC booster functionality may allow the neutral connection element to use the stator winding as a transformer arranged to enable e.g. an 800V battery pack of an electric vehicle to be connected to a 400V DC-charger. In other aspects, the neutral connection element may form a current return path.

At least first portions of said connection elements may be formed as cuboids. It should be noted that a cross-section of said cuboids need not to be quadratic and may preferably be rectangular.

The present disclosure also relates to an electric vehicle comprising the connector unit in accordance with any aspect herein in which the connector unit is formed as an interface between power electronics of the electric vehicle and stator windings. Accordingly, the power electronics may be an inverter that converts DC power from the battery cells to AC power, then the inverter may transmit, by means of the connector unit, said AC power to the windings of the stator. Accordingly, the electric motor may be a 3-phase electric motor, then each winding of the stator may receive AC power having different phases from three different connecting elements.

### BRIEF DESCRIPTION OF THE DRAWINGS

These and other features and advantages of the present disclosure will now be further clarified and described in more detail, with reference to the appended drawings;
- Figure 1: illustrates an objective view of a connector unit in accordance with aspects herein;
- Figure 2: illustrates a cross sectional view of a connector unit in accordance with aspects herein;
- Figure 3: illustrates a cross sectional view of a connector unit in accordance with aspects herein;
- Figure 4: illustrates a top view of a connector unit in accordance with aspects herein;
- Figure 5: illustrates a bottom objective view of a connector unit in accordance with aspects herein; and
- Figure 6: schematically illustrates an electric vehicle comprising an electric motor comprising a connector unit in accordance with aspects herein; and
- Figure 7: illustrates an objective view of an electric motor comprising the connector unit according to any aspect herein.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

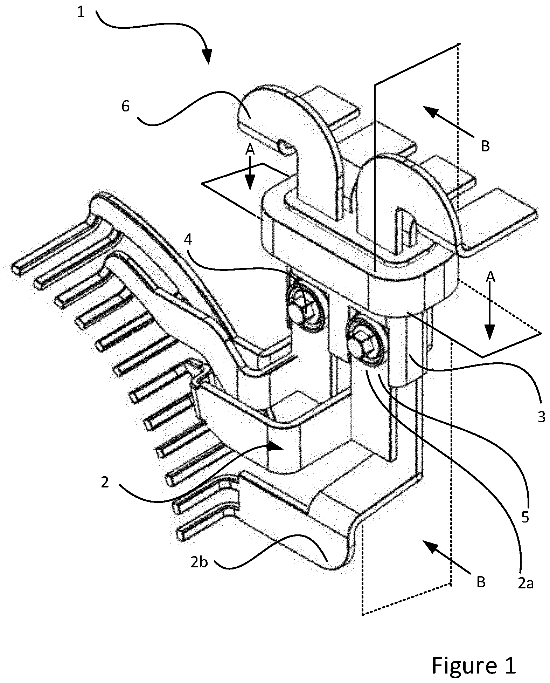

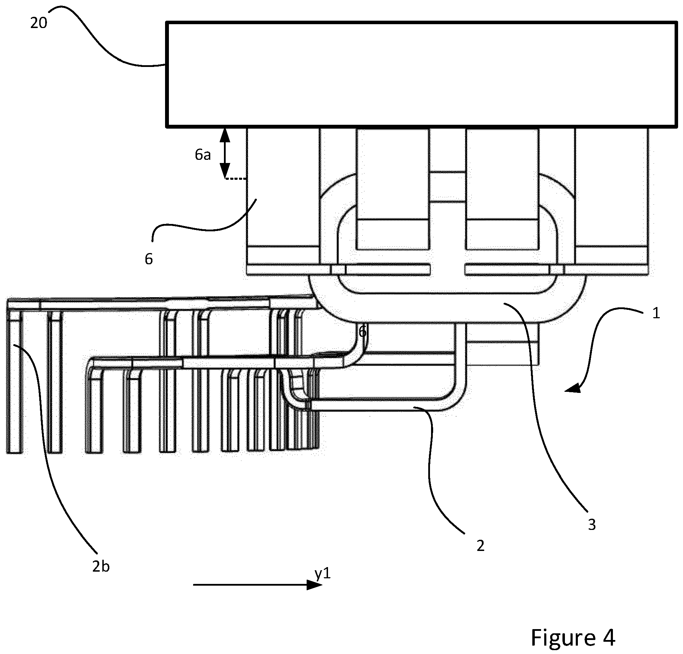

Figure 1 illustrates an objective view of a connector unit 1 for supplying power to an electric motor of a vehicle comprising a plurality of connection elements 2 (four connection elements 2 shown in Figure 1), each connection element 2 comprising a first end portion 2a electrically connected (by busbars 6 in Figure 1) to power electronics (power electronics shown in Figure 4 not in Figure 1), and a second end portion 2b connected to a winding (not shown) of a stator of said electric motor.

Further, figure 1 illustrates that the connector unit 1 comprises an insulating body 3 being connected to each of said a plurality connection elements 2. Figure 1 illustrates that the insulating body 3 electrically isolates said plurality of connection elements 2 from each other. Further, the connector unit 1 comprises at least a first electrically insulated fastening means 4. The term electrically insulated fastening means may refer to that a part of the fastening means 4 extending through any conducting element is electrically insulated (e.g. sleeved in rubber).

Moreover, Figure 1 illustrates that the insulating body 3 comprises a plurality of (two are shown in Figure 1) cavities 5. Each cavity 5 being receiving a corresponding connection element 2. Hence, Figure 1 illustrates that each cavity 5 retains a first end portion 2a of a single connection element 2.

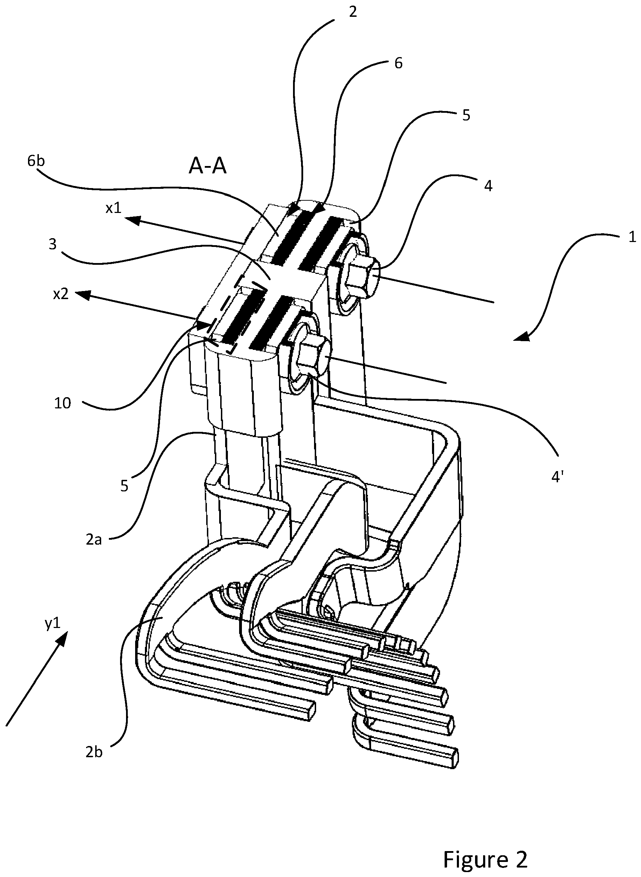

Figure 1 illustrates a cross-section plane A. Figure 2 illustrates an objective view of said plane A-A. Figure 2 illustrates that at least two of said plurality of cavities 5 are arranged along a first extension axis x1. Figure 2 further illustrates that the first fastening means 4 extends, along said first extension axis x1, through the at least two cavities 5 arranged along said first extension axis x1 and corresponding first portions 2a retained therein, thereby securing at least two connection elements 2 to said insulating body 3.

Figures 1 and 2 illustrates a specific aspect of the connector unit 1, the present disclosure is not limited to such an aspect. E.g. the connector unit 1 may comprise a three or more cavities that are arranged along said first extension axis x1.

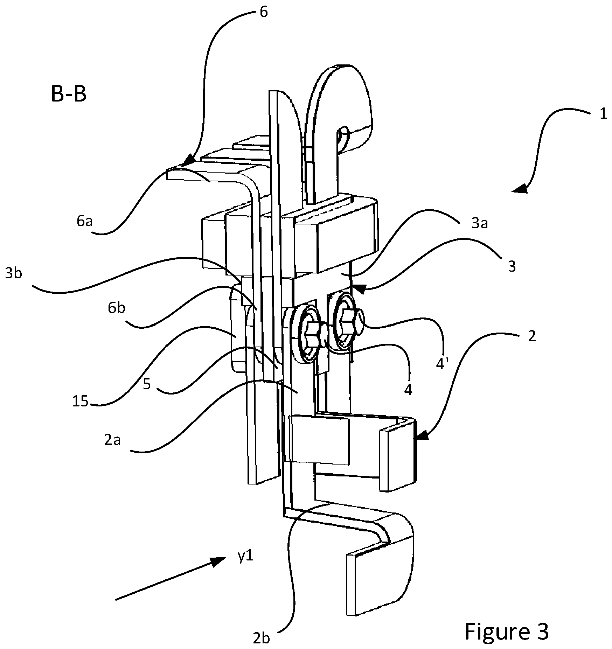

Figure 2 illustrates that said insulating body 3 is further arranged to receive a plurality of busbars 6 (four in Figure 2), each busbar 6 being connected, at a first busbar end portion 6a thereof (not shown in Figure 2, see Figures 3 and 4), to power electronics 20 of said electric motor. Further, second busbar end portions 6b (extending from the first end portions) thereof are arranged to connect to said first end portion 2a of a corresponding connection element 2 so to electrically connect said connection element 2 to said power electronics 20.

Figure 2 further illustrates that each first end portion 2a and each second busbar end portion 6b comprise a mating surface, wherein mating surfaces of first end portions are arranged to contact mating surfaces of corresponding second busbar end portions 6b to form mating-pairs 10. Figure 2 further illustrates that each fastening means 4 may extend through at least two mating pairs.10 (along x1 and x2). Accordingly, in Figurer 2, four mating pairs are shown. As a note, a mating pair 10 in figure 2 is depicted by the dotted line around the mating pair 10. The mating pairs 10 allow for power electronics (not shown) to e.g. transmit AC power associated to a specific phase by said busbars and connection element 2 to a winding end arranged to receive said phase. Hence, in Figure 2 three connection elements 2 may each be associated to one phase, and the fourth may be a neutral connection element. Hence, different connection elements 2 may be connected to different winding ends.

Figure 2 further illustrates that the connector unit 1 further may comprise a second electrically insulated fastening means 4'. The plurality of cavities 5 may then be at least four cavities 5. Accordingly, two cavities 5 are arranged along said first extension axis x1 and the other of said at least four cavities 5 of said insulating body 3 are arranged along a second extension axis x2 parallel (but distanced/separated) to the first extension axis x1. Accordingly, the extension axis x1, x2 each intersects with at least two cavities 5 (that are different). The two cavities 5 along the extension axis x2 are arranged to receive a corresponding connection element 2 so that each cavity 5 of said two cavities 5 retains a first end portion 2a of a single connection element. Accordingly, the second fastening means 4' extends, along said second extension axis x2, through the at least two cavities 5 (and end portions 2a) arranged along said second extension axis x2.

As illustrates in Figure 2, the end portions 2a being arranged in the other two cavities 5 also form mating pairs 10 with corresponding busbars 6. Thereby forming at least four mating pairs.

Figure 2 further illustrates that said plurality of cavities 5 may jointly form two parallel rows, each row extending in a first direction y1 along a width of the insulating body 3, each row comprising at least a pair of said cavities 5. As shown in Figure 2, the first direction y1 is perpendicular to said extension axis x1, x2.

Figure 3 illustrates an objective view of the plane B-B depicted in Figure 1. Figure 3 illustrates that said insulating body 3 defines a first outer surface 3a and an opposing second outer surface 3b Further, as illustrated in Figure 3, each cavity 5 is defined as a recess in one of said surfaces 3a, 3b. Further, Figure 3 illustrates that the insulating body 3 comprises a pair of cavities 5 in each surface 3a, 3b.

The first and/or second fastening means 4, 4' as illustrated in Figures 2 and 3 may each extend from the first outer surface 3a to said opposing second outer surface 3b. The fastening means 4, 4' may at an end be attached to a common support plate 15.

Figure 3 further illustrates that at least the first portions 2a of said connection elements 2 may be formed as cuboids. Such a form allow for an optimal transfer of power from said connection elements 2 towards the winding of the stator.

Figure 4 illustrates a top view of a connecting unit 1 in accordance with any aspect herein. Figure 4 further illustrates power electronics 20 being connected to said busbars 6. The power electronics 20 may comprise an inverter device or any other suitable power electronics arranged to facilitate transfer of power to windings of a stator. The power electronics 20 may further comprise control circuitry including, for example, one or more central processing units (CPUs), graphics processing units (GPUs) dedicated to performing calculations, and/or other processing devices. Further, the power electronics 20 may comprise memory devices comprising one or more computer-readable media and can store information accessible by the control circuitry. The power electronics 20 may be connected to a power source of an electric vehicle.

The end portions 2b may be connected to windings of a stator. The stator windings may be formed by hairpin conductors.

The power electronics 20 may be arranged to facilitate transfer of DC power from battery modules of an electric vehicle to windings of a stator of an electric motor of said vehicle the windings being arranged to 3-phase power to said electric motor. Hence, the power electronics 20 may transform the DC power to AC power and supply AC power of three phases to said windings.

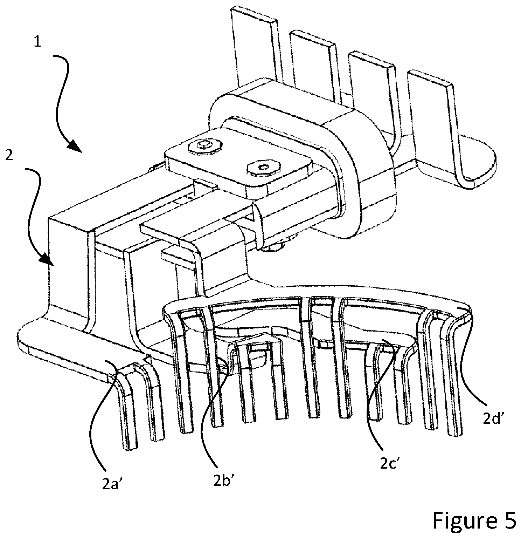

Figure 5 illustrates an objective view of the connector unit 1 in accordance with some aspects. Figure 5 illustrates that the connection elements 2 may be a first connection element 2a' for a first phase, a second connection element 2b' for a second phase, a third connection element 2c' for a third phase, and a fourth connection element 2d' for a fourth phase or for being a neutral connection element or for providing a transformer/DC-DC booster/converter functionality.

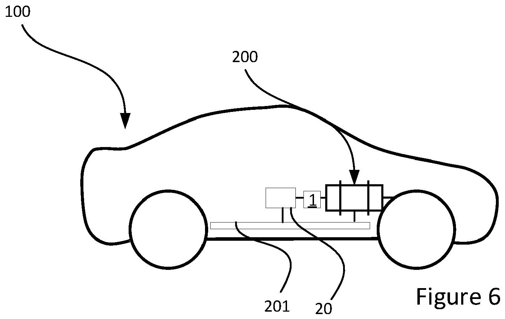

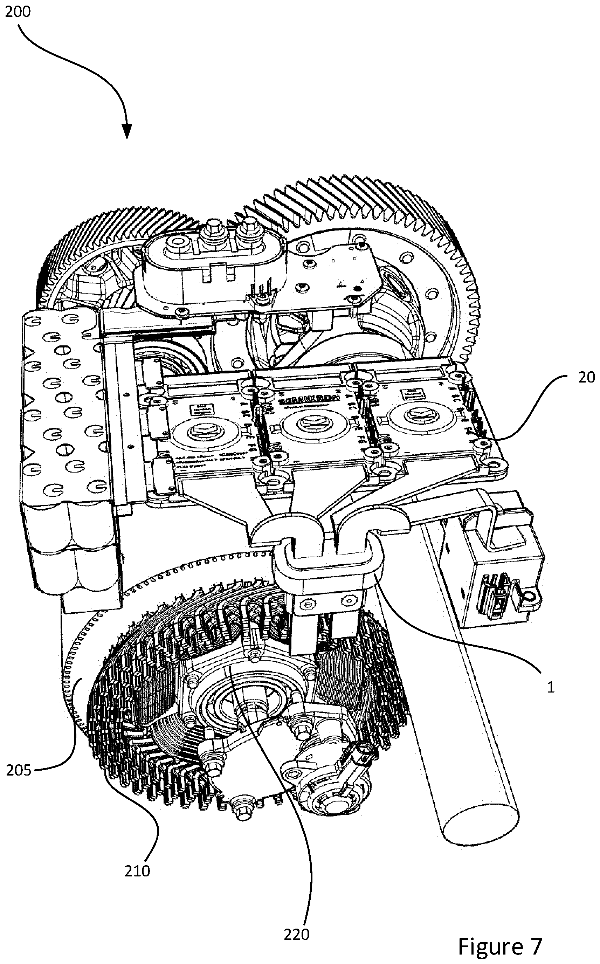

Figure 6 schematically illustrates an electric vehicle 100 comprising said connector unit 1 according to any aspect herein. Figure 6 further discloses an electric motor 200 comprising a stator, a rotor accommodated by the stator (see fig. 7), power electronics and the connector unit 1 according to any aspect herein, wherein the connector unit 1 is configured to supply power to said electric motor. The power may be retrieved from a power source 201, the power source 201 being a battery pack comprising a plurality of battery modules, each module comprising a plurality of battery cells. As appreciated by a skilled person in the art the electric vehicle 100 and the electric motor 200 it is implicit that the vehicle/motor may comprise other parts/modules for allowing the motor 200 and the vehicle 100 to function in accordance with the functioning of said motor 200 and vehicle 100.

Figure 7 illustrates an objective view of an electric motor 200 comprising the connector unit 1. Figure 7 illustrates the connection between the connector unit 1, power electronics 20 and the windings 210 of the stator 205 of the electric motor 200. Figure 7 further illustrates that the stator 205 accommodates a rotor 220.

## Claims

1. A connector unit (1) for supplying power to an electric motor of a vehicle comprising:
- a plurality of connection elements (2), each connection element (2) comprising a first end portion (2a) electrically connected to power electronics (20), and a second end portion (2b) connected to a winding of said electric motor;
- an insulating body (3) being connected to each of said a plurality connection elements (2), the insulating body (3) electrically isolating said plurality of connection elements (2) from each other;
- at least a first electrically insulated fastening means (4);
wherein said insulating body (3) comprises a plurality of cavities (5), each cavity (5) being arranged to receive a corresponding connection element (2) so that each cavity (5) retains a first end portion (2a) of a single connection element (2);
wherein at least two of said plurality of cavities (5) are arranged along a first extension axis (x1);
wherein said first fastening means extends (4), along said first extension axis (x1), through the at least two cavities (5) arranged along said first extension axis (x1) and corresponding first portions (2a) retained therein, thereby securing at least two connection elements (2) to said insulating body (3).

2. The connector unit (1) according to claim 1, wherein said insulating body (3) is further arranged to receive a plurality of busbars (6),
each busbar (6) being connected, at a first busbar end portion (6a) thereof, to power electronics (20) of said electric motor and wherein second busbar end portions (6b) thereof are arranged to connect to said first end portion (2a) of a corresponding connection element (2) so to electrically connect said connection element (2) to said power electronics (20).

3. The connector unit (1) according to any one of the claims 1 or 2, wherein each first end portion (2a) and each second busbar end portion (6b) comprise a mating surface,
wherein mating surfaces of first end portions are arranged to contact mating surfaces of corresponding second busbar end portions (6b) to form mating-pairs (10),
wherein each fastening means (4) is arranged to extend through at least two mating pairs (10).

4. The connector unit (1) according to any one of the preceding claims,
wherein said connector unit (1) further comprises a second electrically insulated fastening means (4'),
wherein, said plurality of cavities (5) is at least four cavities, wherein two other of said at least four cavities of said insulating body are arranged along a second extension axis (x2) parallel to the first extension axis (x1),
wherein said two other cavities (5) are arranged to receive a corresponding connection element so that each cavity of said other two cavities (5) retains a first end portion (2a) of a single connection element
wherein said second fastening means (4') extends, along said second extension axis (x2), through the at least two cavities (5) arranged along said second extension axis (x2).

5. The connector unit (1) according to claim 4, wherein said plurality of cavities jointly form two parallel rows extending in a first direction (y1) along a width of the insulating body, each row being defined by at least a pair of said cavities, wherein the first direction (y1) is perpendicular to said extension axis (x1, x2).

6. The connector unit (1) according to any one of the preceding claims, wherein said insulating body (3) defines a first outer surface (3a) and an opposing second outer surface (3b), wherein each cavity (5) is defined as a recess in one of said surfaces (3a, 3b).

7. The connector unit (1) according to claim 6, wherein said insulating body (3) comprising a pair of cavities (5) in each surface (3a, 3b).

8. The connector unit (1) according to claim 6 or 7, wherein each of the first and/or second fastening means (4, 4') extends from the first outer surface (3a) to said opposing second outer surface (3b).

9. The connector unit (1) according to any one of the preceding claims, wherein said power electronics (20) comprises an inverter device.

10. The connector unit (1) according to any one of the preceding claims, wherein said electrically insulated fastening means (4, 4') is a bolt or a screw sleeved in a dielectric layer.

11. The connector unit (1) according to any one of the preceding claims, wherein said electric motor is a 3-phase electric motor.

12. The connector unit (1) according to any one of the preceding claims, wherein said connection elements (2) are phase connection elements or neutral connection elements.

13. The connector unit (1) according to any one of the preceding claims, wherein at least first portions (2a) of said connection elements (2) are formed as cuboids.

14. An electric vehicle (100) comprising said connector unit (1) according to any one of the claims 1-13.

15. An electric motor (200) comprising:
- a stator (205);
- a rotor (220) accommodated by the stator (205);
- power electronics (20)
- the connector unit (1) according to any one of the claims 1-13, wherein the connector unit (1) is configured to supply power to windings (210) of said stator (205).
